# EUROPÄISCHE PATENTSCHRIFT

(11) **EP 0 679 121 B1**
(45) Veröffentlichungstag und Bekanntmachung des Hinweises auf die Patenterteilung: **17.03.1999**
(21) Anmeldenummer: 95900065.4
(22) Anmeldetag: 03.11.1994
(51) Int. Cl.: B29C 49/22, B29C 47/06, B60K 15/03

(54) **IM CO-EXTRUSIONS-BLASVERFAHREN HERGESTELLTER BEHÄLTER**
CONTAINERS MADE BY THE CO-EXTRUSION BLOWING PROCESS
RECIPIENT REALISE PAR COEXTRUSION-SOUFFLAGE

(30) Priorität: 03.11.1993 DE 4337491
(43) Veröffentlichungstag der Anmeldung: 02.11.1995
(73) Patentinhaber: Kautex Textron GmbH & Co. KG., 53229 Bonn (DE)
(72) Erfinder: LESCH, Hans-Dieter, D-53229 Bonn (DE); MEIER, Thomas, D-50968 Köln (DE); ESSER, Klaus, D-53639 Oberdollendorf (DE); THOMAS, Alfred, D-53773 Hennef (DE)
(74) Vertreter: Koepsell, Helmut, Dipl.-Ing.
(86) Internationale Anmeldenummer: DE9401305
(87) Internationale Veröffentlichungsnummer: WO9512484

(56) Entgegenhaltungen:
- EP-A- 0 076 366
- EP-A- 0 186 154
- EP-A- 0 288 595
- EP-A- 0 294 184
- EP-A- 0 339 413
- DE-A- 2 213 369
- FR-A- 2 285 231
- US-A- 4 990 382
- PATENT ABSTRACTS OF JAPAN vol. 8, no. 170 (M-315) (1607) 7. August 1984 & JP,A,59 064 333 (KIYOORAKU K.K.) 12. April 1984
- DATABASE WPI Week 9124, Derwent Publications Ltd., London, GB; AN 91-175066 & JP,A,3 106 632 (TOYO KOGYO KK) 7. Mai 1991

## Beschreibung

Die Erfindung betrifft einen im Co-Extrusions-Blasverfahren hergestellten Behälter aus thermoplastischem Material gemäß dem Oberbegriff des Anspruches 1.

Die üblicherweise aus Kostengrunden und auch wegen ihrer mechanischen Eigenschaften verwendeten preiswerteren Kunststoffe, beispielsweise die meisten Polyolefine, sind für viele Substanzen permeabel, mit der Folge, daß das Füllgut oder Komponenten desselben durch die nur solche Kunststoffe aufweisende Wandung eines Behälters nach außen diffundiert bzw. diffundieren. Es besteht aber auch die Möglichkeit, daß Komponenten aus der den Behälter umgebenden Atmosphäre, beispielsweise der Sauerstoff der Luft, durch die Wandung eines solchen Behälters in diesen hinein diffundieren. In vielen Fällen sind Diffusionserscheinungen unerwünscht, gegebenenfalls sogar unzulässig. Ein typisches Beispiel stellen Kraftstofftanks aus Polyethylen dar, deren Wandung ohne zusätzliche Behandlung für zumindest einige Kohlenwasserstoffe permeabel sind. Dabei ist es - wie auch in anderen Fällen - möglich, daß mehrere Komponenten des Füllgutes, in diesem Fall also des Kraftstoffes, zusammenwirkend andere Permeationswerte ergeben als jede Komponente, wenn sie einzeln vorliegt. So können sich z. B. die Permeationsverhältnisse bei Kraftstoffen in Abhängigkeit von deren Methanolgehalten ändern.

Es ist bekannt, insbesondere Kraftstofftanks aus Polyethylen innenseitig mit einem Fluor enthaltenen Gas zu behandeln, um so die innere Oberfläche der Tankwandung mit einer dünnen Schicht zu versehen, die nicht oder nur in geringem Maße permeabel für die üblichen Kraftstoffe ist.

Andererseits ist es auch bereits bekannt, im Co-Extrusions-Blasverfahren hergestellte Hohlkörper mit einer mehrschichtigen Wandung zu versehen, wobei wenigstens eine der Schichten die erforderliche mechanische Stabilität des Behälters bewirkt, während wenigstens eine andere Schicht aus einem Material besteht, welches für das Füllgut oder wenigstens eine Komponente desselben nicht oder nur wenig permeabel ist. Da die für diese Sperr- oder Barriereschichten verwendeten Materialien im allgemeinen mit dem die Tragschicht(en) des Hohlkörpers bildenden Material keine feste Verbindung eingehen, also mit diesen nicht verschweißbar sind, besteht normalerweise die Notwendigkeit, eine Zwischenschicht vorzusehen, die als Haftvermittlerschicht bezeichnet wird und im wesentlichen dazu dient, die Barriereschicht mit einer Schicht aus einem anderen Material zu verbinden. Es wird dazu auf die US-PS 4,522,775 und die EP-OS 0,249,866 verwiesen, in denen die vorstehend angeführten Probleme und Überlegungen erörtert werden.

Es hat sich herausgestellt, daß die Sperrwirkung der Barriereschicht aus den heute allgemein verwendeten Materialien in vielen Fällen bereits nach einigen Wochen merklich nachläßt, und zwar gegebenenfalls in einem solchen Ausmaß, daß die verbleibende Sperrwirkung nicht mehr den Erfordernissen genügt. Dies liegt unter anderem daran, daß das Material der Barriereschicht bei den in Betracht kommenden Temperaturen wesentlich spröder und damit weniger flexibel ist als insbesondere Polyethylen. Diese Eigenschaft kann dazu führen, daß die Barriereschicht bei Vorliegen ungünstiger Umstände so beschädigt wird, daß sie die ihr zugedachte Funktion jedenfalls nicht mehr in dem erforderlichen Ausmaß erfüllen kann.

So kann die Barriereschicht eine nicht unerhebliche mechanische Beanspruchung dadurch erfahren, daß die an der Innenseite der Behälterwandung angeordnete Schicht beispielsweise aus Polyethylen unter der Einwirkung des Füllgutes, also bei einem Kfz.-Tank unter der Einwirkung des Kraftstoffes, quillt. Dies kann zu merklichen Dimensionsänderungen dieser inneren Schicht parallel zum Verlauf der Wandung führen mit der Folge, daß diese Schicht Bewegungen ausführt, die auf die Barriereschicht, beispielsweise über eine zwischengeschaltete Haftvermittlerschicht, übertragen werden. Es kann dann der Fall eintreten, daß die Barriereschicht erheblichen Spannungen unterliegt, die zudem nach Art, Richtung und Größe nicht ohne weiteres definierbar und damit nicht vorherbestimmbar sind. In ungünstigen Fällen können die dadurch hervorgerufenen Beanspruchungen zu Beschädigungen der Barriereschicht führen, da diese in der Dicke, die erforderlich ist, um die gewünschte Sperrwirkung zu erhalten, nicht ausreichend flexibel ist, um den Bewegungen der inneren Schicht zu folgen bzw. durch entsprechende Verformungen die Spannungen abzubauen.

Die vorbeschriebene Art der Beanspruchung tritt im allgemeinen als eine Art Dauerbeanspruchung auf, die über längere Zeiträume wirksam ist. In der Mehrzahl der Anwendungsfälle von Kunststoffverpackungen mit einer mehrschichtigen Wandung haben diese Erscheinungen keine große Bedeutung, da beispielsweise sehr viele der als Verpackungen benutzten Kunststofferzeugnisse nur eine sehr kurze Gebrauchsdauer haben.

Hingegen kann die unter Umständen relativ kurze Dauer der Wirksamkeit der Barriereschicht bei Hohlkörpern mit längerer Gebrauchsdauer zu Schwierigkeiten führen. Als typische Beispiele seien hier in Kraftfahrzeuge einzubauende Kraftstofftanks genannt, von denen im allgemeinen erwartet wird, daß ihre Gebrauchsdauer nicht kürzer ist als die Lebensdauer des Kraftfahrzeuges. Es sind aber auch andere Anwendungsfälle, beispielsweise Großverpackungen, wie Fässer, stationäre Tanks oder dgl. denkbar, bei denen das vorgenannte Problem ebenfalls vorhanden sein kann.

Insbesondere bei in Kraftfahrzeugen eingebauten Kraftstofftanks führt die Tatsache, daß die für die Barriereschicht üblicherweise verwendenten Materialien bei den in Betracht kommenden Umgebungstemperaturen wesentlich spröder, also weniger flexibel sind als die tragenden Schichten und auch die Haftvermittlerschichten, zu einem weiteren Problem, welches darin besteht, daß bei mechanischen Beanspruchungen, wie sie beispielsweise bei einem Auffahrunfall auftreten können, die Barriereschicht in der Tankwand aufgrund der schlagartigen Verformung reißt oder sonstwie beschädigt wird mit der Folge, daß dieser möglicherweise zunächst kleine Riß sich in andere Schichten in der Wandung fortsetzt und der Tank undicht wird, so daß unter Umständen Kraftstoff ausläuft. Dies könnte, wenn eine derartige Weiterbildung eines in der Barriereschicht entstandenen Risses sehr schnell erfolgt, unmittelbar nach dem Aufprall und der dadurch bewirkten Verformung zur Entstehung von Bränden oder Explosionen führen. Aber auch dann, wenn die Rißfortbildung längere Zeit in Anspruch nimmt, stellt, abgesehen von allen anderen unerwünschten Auswirkungen, das Auslaufen von Kraftstoffen eine erhebliche Gefährdung der jeweiligen Umgebung dar. Jedenfalls ist festzustellen, daß durch die mechanischen Eigenschaften der die Barriereschicht bildenden Materialien, also insbesondere deren Sprödigkeit, wesentliche Vorteile der Verwendung von Kunststofftanks in Kraftfahrzeugen, insbesondere die elastische Verformbarkeit derartiger Tanks, verlorengehen, da auch hier das schwächste Glied in der Kette, also die Barriereschicht, letzten Endes die Eigenschaften und damit die Verwendbarbeit derartiger Tanks bestimmt. Entsprechendes gilt auch für andere Behälter, z. B. die bereits genannten Fässer und stationären Tanks.

Es war bereits erwähnt worden, daß die Barriereschichten, wie auch die Haftvermittlerschichten, eine wesentlich geringere Dicke aufweisen als die übrigen Schichten des die Wandung des Hohlkörper bildenden Laminats. Da durchweg die Sperrwirkung der Barriereschicht proportional zu deren Dicke ist, wird bei bekannten Behältern die Mindestdicke einer solchen Barriereschicht durch die angestrebte Sperrwirkung bestimmt.

Der Erfindung liegt somit unter` anderem die Aufgabe zugrunde, die durch die relative Sprödigkeit des die Barriereschicht bildenden Materials verursachten Nachteile bei formsteifen Behältern aus thermoplastischem Kunststoff zumindest merklich zu reduzieren, insbesondere mit dem Ziel, die Wirksamkeit der Barriereschicht unter allen im praktischen Betrieb vorkommenden Bedingungen über einene längeren Zeitraum zumindest in dem Maße aufrechtzuerhalten, daß bestimmte Mindesterfordernisse nicht umterschritten werden.

Diese Aufgabe wird dadurch gelöst, daß das die übliche Barriereschicht bildende Material parallel zum Verlauf der Wandung unterteilt wird derart, daß zumindest zwei Barriereschichten vorhanden sind, die im wesentlichen parallel zueinander verlaufen und einen Abstand voneinander aufweisen, wobei jedoch diese Barriereschichten dünner sind als die Schichtdicke, die bei Verwendung nur einer Barriereschicht zur Erzielung des angestrebten Barriereeffektes notwendig wäre. Im allgemeinen wird aufgrund der bereits erwähnten, in dem hier interessierenden Schichtdickenbereich vorhandenen linearen Abhängigkeit zwischen Dicke der Barriereschicht und deren Permeabilität die Anordnung so getroffen sein, daß jede der beiden Teilschichten etwa die Hälfte der Dicke einer Normalschicht aufweist. Es ist natürlich auch möglich, die übliche Barriereschicht in mehr als zwei Teilschichten zu unterteilen, wobei jedoch im allgemeinen gewisse untere Grenzen bezüglich der Schichtdicke durch die technischen Gegebenheiten bei der Extrusion zu beachten sein werden. D.h., daß es nicht möglich ist, bei der Herstellung des Vorformlings durch Extrusion eine bestimmte Schichtdicke zu unterschreiten. Diese Schichtdicke erfährt beim anschließenden Aufweiten des Vorformlings zum Behälter aufgrund der dabei stattfindenden Dehnung eine weitere Verringerung ihrer Dicke. Jedoch können beim Aufweiten des Vorformlings in der Blasform bestimmte Aufweitverhältnisse nicht überschritten werden. Im allgemeinen wird der angestrebte Effekt mit zwei Teilschichten erreicht werden können. Bei den heute üblichen Materialien würde eine Wanddicke der beiden Schichten, die in der Summe gerade noch ausreicht, die angestrebte Sperrwirkung zu erzielen, bereits so gering sein, daß die einzelnen Teilschichten eine merklich geringere Sprödigkeit aufweisen als eine Schicht mit der doppelten Schichtdicke, so daß das angestrebte Ziel einer Vergrößerung der Flexibilität und damit der Verformbarkeit des die Sperrschicht bildenden Materials erreicht werden kann.

Die wenigstens zwei Barriereschichten können aus gleichen Materialien bestehen. Sie können aber auch aus unterschiedlichen Materialien hergestellt sein. Letzteres gäbe die Möglichkeit, die Materialien gegebenenfalls so auszuwählen, daß sie bezügliche ihrer Wirksamkeit einander ergänzen. Dies kann z.B. bezüglich der Durchlässigkeit bzw. der Sperrwirkung für Methanol und andere Kohlenwasserstoffe, die in Kraftstoffen enthalten sind, besonders wichtig sein. Unabhängig davon, ob gleiche oder unterschiedliche Materialien verwendet werden, kann ein weiterer Vorteil darin bestehen, daß durch die in Diffusionsrichtung erste Barriereschicht nur geringe Mengen bestimmter Substanzen diffundieren, die die Permeabilität der zweiten Schicht nachteilig beeinflussen können, so daß unter Umständen ein Sperreffekt erzielt wird, welcher größer ist als bei einer einzigen Schicht, deren Dicke gleich der Summe der Dicken der beiden dünneren in einem Abstand von einander angeordneten Schichten ist.

Der durch die Erfindung angestrebte Effekt, die elastische Verformbarkeit, daß heißt jene Verformung, bei welcher noch keine nachteiligen Auswirkungen auf die Sperrwirkung der Barriereschicht eintreten, in Einklang zu bringen mit den möglicherweise auftretenden mechanischen Beanspruchungen, kann auch dadurch gefördert werden, daß die wenigstens zwei Barriereschichten mit der zwischen ihnen befindlichen angeordneten wenigstens einen Schicht etwa in der Mitte des Laminats angeordnet sind. Dies wird im allgemeinen darauf hinauslaufen, daß die Trennschichten symmetrisch zur Mittelebene bzw. -fläche des Laminats bzw. der Wandung angeordnet sind. Auf diese Weise kann erreicht werden, daß die Barriereschichten etwa im Bereich der neutralen Faser der Wandung oder nahe derselben verlaufen, in welchem sie bei einer Verformung der Tankwandung z.B. durch einen Auffahrunfall, die geringste Beanspruchung durch Druck- und/oder Zugspannungen erfahren. Bei dieser Anordnung wäre es zweckmäßig, die beiden Barriereschichten nur durch eine dünne Schicht aus einem anderen Material in einem Abstand voneinander zu halten. Diese zwischen den Barriereschichten befindliche Schicht kann aus einem Material bestehen, welches auch für die Haftvermittlerschichten verwendet wird. Die Dicke einer solchen Schicht braucht nicht mehr als z.B. 100 mµ zu betragen. Die Verwendung von Material, welches auch für die Haftvermittlerschicht benutzt wird, hätte den Vorteil, daß, wenn die bei der Herstellung der Höhlkörper unvermeidbarerweise anfallenden Abfallteile zurückgeführt und zur Bildung einer besonderen Schicht im Laminat verwendet werden, die dann mehrere Materialkomponenten enthält, die Anzahl der unterschiedlichen Komponenten durch das Vorhandensein der Schicht zwischen den beiden Barriereschichten nicht erhöht würde. Andererseits ist es natürlich auch möglich, für die Schicht zwischen den beiden Barriereschichten ein Material zu verwenden, welches für diesen Zweck besonders geeignet und/oder billiger ist. Diese Möglichkeit wird dann in Betracht gezogen werden, wenn das für diese Schicht verwendete Material auf die Eigenschaften des rückgeführten und zur Bildung wenigstens einer besonderen Schicht im Laminat verwendeten Materials keine nachteiligen Auswirkungen hat.

Unabhängig von den vorstehend angeführten Erwägungen und auch unabhängig davon, wo im Laminat die Barriereschichten angeordnet sind, kann bzw. können die zwischen den Barriereschichten befindliche Schicht(en) aus Material(ien) bestehen, welches bzw. welche ein merklich größeres Formänderungsvermögen als die beiden Barriereschichten aufweist bzw. aufweisen. Die dadurch bewirkte größere elastische Verformbarkeit der Zwischenschicht führt dazu, daß bei Auftreten von Beanspruchungen in diesem Bereich zumindest ein Teil der Kräfte bzw. der daraus resultierenden Spannungen abgebaut wird und somit auf die Barriereschichten nicht zur Einwirkung kommt.

Weiterhin kann wenigstens eine der wenigstens zwei Barriereschichten nahe der inneren Oberfläche des Hohlkörpers in dessen Wandung angeordnet sein. Dies hätte zur Folge, daß die diese Barriereschicht - normalerweise unter Zwischenschaltung einer Haftvermittlerschicht - abdeckende Schicht aus einem anderen Material, vorzugsweise einem Polyolefin, eine relativ geringe Dicke und somit ein geringes Volumen aufweist mit dem Ergebnis, daß durch das einleitend erwähnte Quellen des Materials unter der Einwirkung des Füllgutes aufgrund der geringen Masse dieser Schicht nur entsprechend kleine Druck- und/oder Zugspannungen in dieser Schicht auftreten, so daß die Beanspruchung der Barriereschichten durch diese Spannungen ebenfalls entsprechend gering ist.

Zur Vermeidung des Quellens der die innere Oberfläche der Wandung bildenden Schicht könnte auch erwogen werden, diese in der üblichen Weise einer Behandlung durch Fluorieren zu unterziehen. Dies hätte zur Folge, daß die innere Schicht zumindest in wesentlich geringerem Umfang als bisher quellen würde, so daß demzufolge auch entsprechend geringere Spannungen durch Quellen in der Wandung des Tanks aufträten.

Es wäre ggf. auch möglich, als innere Schicht, die die innere Oberfläche der Tankwandung bildet, eine Barriereschicht zu verwenden. Dies wird allerdings nur dann in Betracht kommen, wenn das diese innere Barriereschicht bildende Material mit dem Füllgut kompatibel ist.

Die Verwendung von wenigstens zwei Barriereschichten im Laminat hat zudem den Vorteil, daß Dünnstellen in der einen Barriereschicht aufgrund statistischer Gegebenheiten durch die andere Barriereschicht im allgemeinen kompensiert werden.

In der Zeichnung sind einige Ausführungsbeispiele der Erfindung im Schema dargestellt. Es zeigen:
- Fig. 1: einen Ausschnitt aus einer Wandung, die aus einem siebenschichtigen Laminat besteht,
- Fig. 2: einen Ausschnitt aus einer Wandung, die aus einem achtschichtigen Laminat besteht,
- Fig. 3: einen Ausschnitt aus einer Wandung, die aus einem neunschichtigen Laminat besteht,
- Fig. 4: einen Ausschnitt aus einer Wandung, die ebenfalls aus einem neunschichtigen Laminat, jedoch mit anderem Aufbau desselben, besteht,
- Fig. 5: einen Ausschnitt aus einer Wandung, die aus einem zehnschichtigen Laminat besteht,
- Fig. 6: einen Ausschnitt aus einer Wandung, die aus einem elfschichtigen Laminat besteht.

In allen Fällen kann es sich um die Wandung beispielsweise eines Kraftstofftankes für ein Kraftfahrzeug handeln. Für einander entsprechende Schichten werden gleiche Bezugszeichen verwendet.

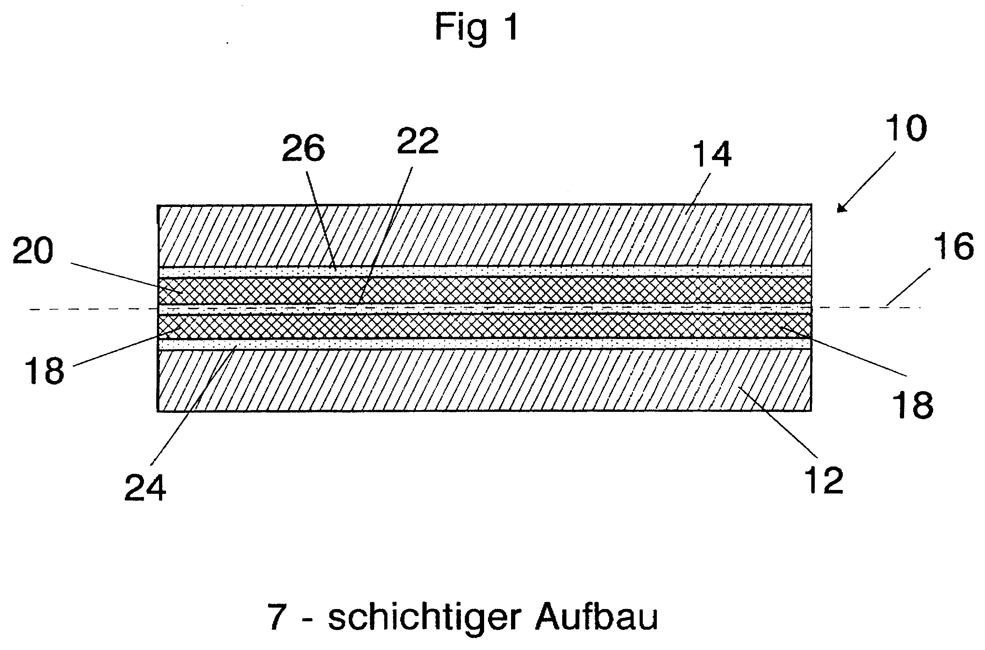

Beim Ausführungsbeispiel gemäß Fig. 1 ist die Wandung 10 als Laminat mit sieben parallelen Schichten ausgebildet, von denen die beiden äußeren Schichten 12 und 14 aus einem Polyolefin, beispielsweise Polyethylen, bestehen und der Wandung 10 die notwendige mechanische Festigkeit auch unter Berücksichtigung sonstiger Erfordernisse geben. Die Wandung 10 ist mit zwei im wesentlichen symmetrisch zur Mittelebene 16 angeordneten Barriereschichten 18 und 20 versehen, die durch eine zwischen ihnen angeordnete dünne Schicht 22 von z. B. 0,05 mm - 2 mm Dicke miteinander verbunden sind. Ferner sind zwei Haftvermittlerschichten 24 und 26 vorhanden, von denen die Haftvermittlerschicht 24 die Verbindung zwischen der Polyolefinschicht 12 und der Barriereschicht 18 und die Haftvermittlerschicht 26 die Verbindung zwischen der Polyolefinschicht 14 und der Barriereschicht 20 herstellt. Für die zwischen den beiden Barriereschichten 18, 20 befindliche mittlere Schicht 22, die im wesentlichen entlang der neutralen Faser verläuft, kann das gleiche Material verwendet werden, aus denen auch die beiden Haftvermittlerschichten 24 bzw. 26 bestehen. Die zwischen den beiden Barriereschichten befindliche mittlere Schicht 22 sollte nach Möglichkeit aus einem Material bestehen, welches ein hohes Formänderungsvermögen aufweist, um so dazu beizutragen, ggf. auftretende Kräfte und Spannungen zumindest teilweise abzubauen, bevor sie auf die Barriereschichten zur Einwirkung kommen.

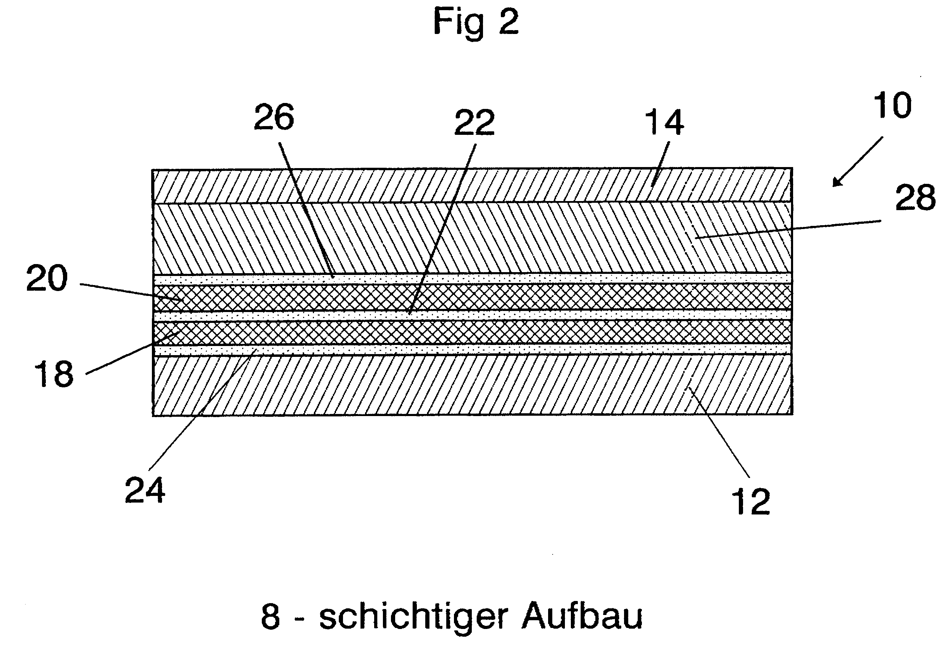

Beim Ausführungsbeispiel gemäß Fig. 2 ist zwischen der einen Polyolefinschicht 14 und der Haftvermittlerschicht 26 eine zusätzliche Schicht 28 angeordnet, die aus rückgeführtem Material besteht. Die Dicke dieser Schicht wird jedenfalls dann, wenn das gesamte bei der Herstellung der Behälter entstehende Abfallmaterial zur weiteren Verarbeitung zurückgeführt wird, im wesentlichen abhängen von dem Anteil des Abfallmaterials an dem insgesamt zum Herstellen eines Behälters eingebrachten Materials. Beim Blasformen handelt es sich beim Abfallmaterial im allgemeinen um jene Teile des Vorformlings, die beim Schließen der Blasform vom Vorformling abgequetscht werden und außerhalb des eigentlichen Formnestes der Blasform bleiben. Die Schicht 28 aus rückgeführtem Material enthält demzufolge Bestandteile aller Schichten des Laminats. Da in der Schicht 28 der Anteil aus den Schichten 12, 14 überwiegt, gehen die beiden Schichten 14 und 28 ohne weiteres eine feste Verbindung miteinander ein, wohingegen zwischen der benachbarten Barriereschicht 20 und der Schicht 28 aus rückgeführtem Material eine Haftvermittlerschicht 26 vorzusehen ist. Die Schicht 28 aus rückgeführtem Material stellt, wie auch die Schichten 12 und 14, im allgemeinen eine tragende Schicht dar.

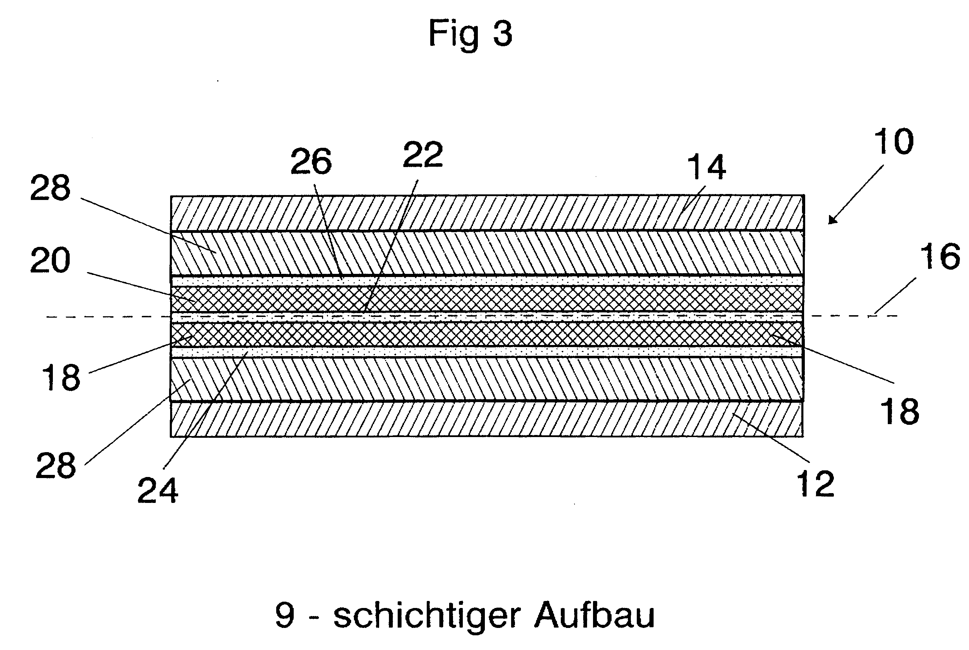

Beim Ausführungsbeispiel gemäß Fig. 3 ist das rückgeführte Abfallmaterial auf zwei Schichten 28 verteilt, die beide außenseitig durch jeweils eine Schicht 12 bzw. 14 aus einem Polyolefin - oder ggf. aus einem anderen Material - abgedeckt sind.

Der neunschichtige Aufbau ermöglicht eine symmetrische Anordnung analog dem der Fig. 1.

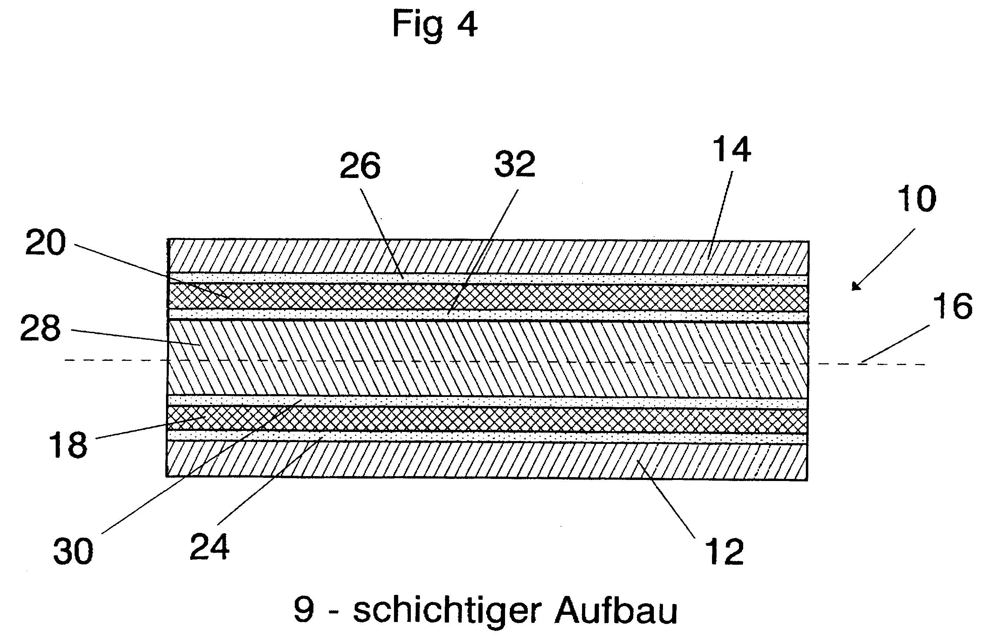

Beim Ausführungsbeispiel gemäß Fig. 4 ist die Schicht 28 aus rückgeführtem Abfallmaterial in der Mitte des Laminats angeordnet, wobei sich ebenfalls ein neunschichtiger Aufbau ergibt, jedoch zusätzlich zwei Haftvermittlerschichten 30, 32 erforderlich sind, um die mittig angeordnete Schicht 28 aus rückgeführtem Material mit der jeweils benachbarten Barriereschicht 18 bzw. 20 zu verbinden. Hier stellt die Schicht 28 mit den beiden Haftvermittlerschichten 30, 32 eine Gesamt-Trennschicht zwischen den beiden Barriereschichten 18, 20 dar.

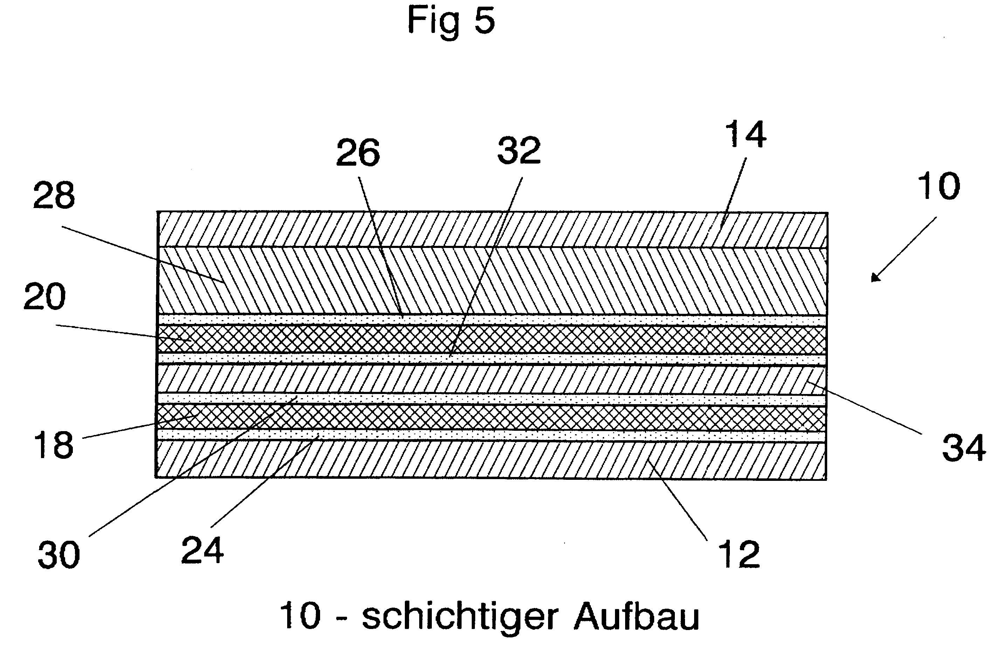

Das Ausführungsbeispiel gemäß Fig. 5 zeigt ein zehnschichtiges Laminat, bei welchem die Schicht 28 aus rückgeführtem Material wiederum nicht symmetrisch angeordnet ist und zwischen den beiden Barriereschichten 18, 20 zusätzlich noch eine Schicht 34 aus einem Material angeordnet ist, welches mit dem der Schichten 12 und 14 übereinstimmt, also beispielsweise ein Polyolefin ist. Diese Anordnung kann auch dem Zweck dienen, den Bereich zwischen den beiden Barriereschichten 18, 20 in erheblichem Maße elastisch verformbar auszubilden. Der Aufbau gemäß Fig. 5 erfordert ebenfalls vier Haftvermittlerschichten 24, 26, 30, 32.

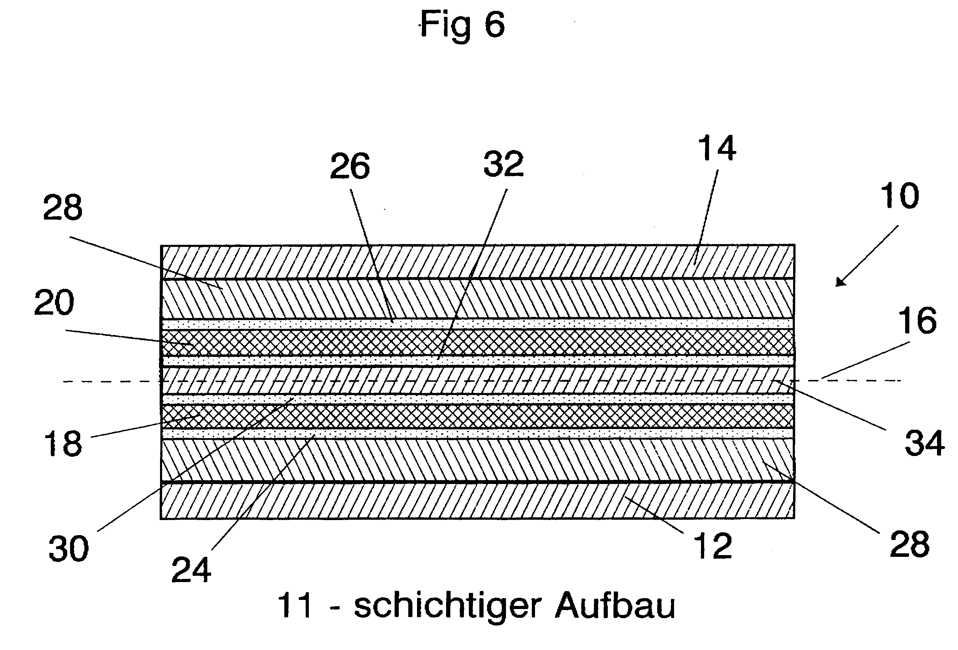

Die Wandung gemäß Fig. 6 weist ein Laminat mit einem elfschichtigen Aufbau auf, wobei die beiden Barriereschichten 18, 20 wiederum symmetrisch zur Mittellinie 16 angeordnet sind. Der Unterschied gegenüber der Ausführungsform gemäß Fig. 5 besteht zudem darin, daß das rückgeführte Material auf zwei Abfallschichten 28 aufgeteilt ist, die den beiden äußeren Schichten 12 bzw. 14 unmittelbara benachbart sind.

In sämtlichen Darstellungen sind die einzelnen Schichten bezüglich ihrer jeweiligen Dicke nicht maßstabgerecht dargestellt. Insbesondere sind in den schematischen Darstellungen der Zeichnungen sowohl die Barriereschichten als auch die Haftvermittlerschichten und zum Teil auch die zwischen den beiden Barriereschichten befindlichen Schichten wesentlich dicker dargestellt als dies in Wirklichkeit in Relation zur Stärke der tragenden schichten, z. B. der beiden äußeren Schichten 12, 14, der Fall ist. So können die beiden Haftvermittlerschichten 24 und 26 sowie die mittlere Schicht 22 der Fig. 1 eine Dicke von etwa 20 mµ aufweisen. Die beiden Barriereschichten können beispielsweise etwa 50 mµ dick sein.

In jedem Fall wird durch die Verteilung des Barrierematerials auf mehrere schichten erreicht, daß letztere dünner sein können und damit weniger spröde sind als es bei Anordnung des gesamten für die Erzielung des angestrebten Sperreffektes notwendigen Barrierematerials in nur einer Schicht der Fall wäre. Eingehende Versuche haben gezeigt, daß selbsttragende, im wesentlichen formsteife Hohlkörper aus thermoplastischem Material, deren Wandung in der vorbeschriebenen Weise ausgeführt ist, erhebliche Stoß- und Schlagbeanspruchungen mit entsprechenden elastischen Verformungen erfahren können, ohne daß die Sperrwirkung der Barriereschichten eine merkliche Beeinträchtigung erfährt.

Die Erfindung läßt sich demzufolge dahingehend zusammenfassen, daß das Barrierematerial auf so viel zueinander parallele und einen Abstand voneinander aufweisende Schichten im Laminat verteilt wird, daß einerseits eine ausreichende Sperrwirkung erzielt wird, andererseits die einzelnen Barriereschichten dünn genug sind, um eine ausreichende Flexibilität aufzuweisen.

## Patentansprüche

1. Im Co-Extrusions-Blasverfahren hergestellter selbsttragender Behälter, insbesondere Kraftstofftank, aus thermoplastischem Material, dessen Wandung (10) zumindest in Teilbereichen aus einem Laminat besteht, dessen Schichten (12, 14, 18, 20, 22, 24, 26) zumindest aus drei unterschiedlichen Materialien hergestellt sind, von denen wenigstens eine Schicht (18, 20) aus einem Material besteht, welches zumindest für bestimmte Substanzen eine merklich geringere Permeabilität aufweist als wenigstens eine andere Schicht im Laminat, dadurch gekennzeichnet, daß das Laminat wenigstens zwei Schichten (18, 20) aus einem Barrierematerial aufweist, zwischen denen wenigstens eine Schicht (22) aus einem anderen Material angeordnet ist, wobei die Dicke der einzelnen Barriereschichten (18, 20) so gewählt ist, daß sie ohne Vorhandensein wenigstens einer weiteren Barriereschicht keine ausreichende Barrierewirkung erzielen würde.

2. Hohlkörper nach Anspruch 1, dadurch gekennzeichnet, daß die wenigstens zwei Barriereschichten (18, 20) aus gleichen Materialien bestehen.

3. Hohlkörper nach Anspruch 1, dadurch gekennzeichnet, daß die wenigstens zwei Barriereschichten (18, 20) aus unterschiedlichen Materialien bestehen.

4. Hohlkörper nach Anspruch 1, dadurch gekennzeichnet, daß die beiden Barriereschichten (18, 20) lediglich durch eine Schicht (22) aus einem anderen Material voneinander getrennt sind.

5. Hohlkörper nach Anspruch 1, dadurch gekennzeichnet, daß die zwischen beiden Barriereschichten (18, 20) angeordnete Schicht(en) (22; 28; 34) ein merklich größeres Formänderungsvermögen aufweist bzw. aufweisen als die Barriereschichten (18, 20).

6. Hohlkörper nach Anspruch 1, dadurch gekennzeichnet, daß die wenigstens zwei Barriereschichten (18, 20) mit der zwischen ihnen angeordneten wenigstens einen Schicht (22) aus einem anderen Material etwa in der Mitte (16) des Laminats angeordnet sind.

7. Hohlkörper nach Anspruch 4, dadurch gekennzeichnet, daß wenigstens eine Schicht (24, 26) des Laminats aus einem Haftvermittler-Material besteht, welches in der Lage ist, zwei Schichten (12, 18; 14, 20), die aus unterschiedlichen Materialien bestehen und sich auch vom Material der Haftvermittlerschicht unterscheiden, miteinander zu verbinden, und die zwischen den Barriereschichten (18, 20) befindliche Schicht (22) aus einem Material besteht, welches auch für die Haftvermittlerschichten (24, 26) verwendet wird.

8. Hohlkörper nach Anspruch 1, dadurch gekennzeichnet, daß wenigstens eine der Barriereschichten nahe der inneren Oberfläche des Hohlkörpers angeordnet ist.

9. Hohlkörper nach Anspruch 1, dadurch gekennzeichnet, daß wenigstens eine der Barriereschichten (18, 20) aus Polyamid besteht.

10. Hohlkörper nach Anspruch 1, dadurch gekennzeichnet, daß wenigstens eine der Barriereschichten (18, 20) aus EVOH (Ethylen-Vinylalkohol) besteht.

11. Hohlkörper nach Anspruch 1, dadurch gekennzeichnet, daß wenigstens eine der Barriereschichten (18, 20) aus PVDF (Polyvinylidenfluorid) besteht.

12. Hohlkörper nach Anspruch 1, dadurch gekennzeichnet, daß wenigstens eine der anderen Schichten (12, 14) aus einem Polyolefin, z. B. Polyethylen besteht.

13. Hohlkörper nach Anspruch 1, dadurch gekennzeichnet, daß wenigstens eine der anderen Schichten aus zurückgeführtem Material besteht, welches die Bestandteile aller Schichten enthält.

14. Hohlkörper nach Anspruch 1, dadurch gekennzeichnet, daß die das Laminat innenseitig begrenzende Schicht aus einem Kunststoff besteht, der mittels Fluor behandelt worden ist.

## Claims

1. A self-supporting container produced by a co-extrusion blow moulding process, in particular a fuel tank, comprising thermoplastic material, whose wall (10) at least in portions thereof comprises a laminate whose layers (12, 14, 18, 20, 22, 24, 26) are made at least from three different materials of which at least one layer (18, 20) comprises a material which has a markedly lower level of permeability at least for certain substances than at least one other layer in the laminate, characterised in that the laminate has at least two layers (18, 20) comprising a barrier material, between which is arranged at least one layer (22) of another material, wherein the thickness of the individual barrier layers (18, 20) is so selected that it would not achieve an adequate barrier effect without the presence of at least one further barrier layer.

2. A hollow body according to claim 1 characterised in that the at least two barrier layers (18, 20) comprise identical materials.

3. A hollow body according to claim 1 characterised in that the at least two barrier layers (18, 20) comprise different materials.

4. A hollow body according to claim 1 characterised in that the two barrier layers (18, 20) are separated from each other only by a layer (22) of another material.

5. A hollow body according to claim 1 characterised in that the layer or layers (22; 28; 34) arranged between the two barrier layers (18, 20) has or have a markedly greater capacity for deformation than the barrier layers (18, 20).

6. A hollow body according to claim 1 characterised in that the at least two barrier layers (18, 20) with the at least one layer (22) of another material which is arranged between them are arranged substantially in the middle (16) of the laminate.

7. A hollow body according to claim 4 characterised in that at least one layer (24, 26) of the laminate comprises a bonding material which is capable of joining together two layers (12, 18; 14, 20) which comprise different materials and which also differ from the material of the bonding layer, and the layer (22) between the barrier layers (18, 20) comprises a material which is also used for the bonding layers (24, 26).

8. A hollow body according to claim 1 characterised in that at least one of the barrier layers is arranged near the inside surface of the hollow body.

9. A hollow body according to claim 1 characterised in that at least one of the barrier layers (18, 20) comprises polyamide.

10. A hollow body according to claim 1 characterised in that at least one of the barrier layers (18, 20) comprises EVOH (ethylene vinyl alcohol).

11. A hollow body according to claim 1 characterised in that at least one of the barrier layers (18, 20) comprises PVDF (polyvinylidene fluoride).

12. A hollow body according to claim 1 characterised in that at least one of the other layers (12, 14) comprises a polyolefin, for example polyethylene.

13. A hollow body according to claim 1 characterised in that at least one of the other layers comprises recycled material which contains the constituents of all layers.

14. A hollow body according to claim 1 characterised in that the layer delimiting the laminate on the inside comprises a plastics material which has been treated by means of fluorine.

## Revendications

1. Récipient autonome réalisé par coextrusion-soufflage, en particulier un réservoir de carburant, en matériau thermoplastique, dont la paroi (10) se compose d'un stratifié dans des sous-zones, dont les couches (12, 14, 18, 20, 22, 24, 26) sont réalisées au moins à partir de trois matériaux différents, à partir desquels au moins une couche (18, 20) se compose d'un matériau, lequel présente au moins, pour certaines substances, une perméabilité particulièrement réduite comme au moins une autre couche dans le stratifié, caractérisé en ce que le stratifié présente au moins deux couches (18, 20) réalisées à partir d'un matériau d'arrêt, entre lesquelles est agencée au moins une couche (22) réalisée à partir d'un autre matériau, l'épaisseur des couches d'arrêt individuelles (18, 20) étant choisie de manière à ce qu'elles ne puissent pas atteindre une efficacité d'arrêt suffisante sans la présence d'au moins une autre couche d'arrêt.

2. Corps creux selon la revendication 1, caractérisé en ce qu'au moins deux couches d'arrêt (18, 20) se composent des mêmes matériaux.

3. Corps creux selon la revendication 1, caractérisé en ce qu'au moins deux couches d'arrêt (18, 20) se composent de matériaux différents.

4. Corps creux selon la revendication 1, caractérisé en ce que les deux couches d'arrêt (18, 20) sont simplement séparées l'une de l'autre par une couche (22) réalisée à partir d'un autre matériau.

5. Corps creux selon la revendication 1, caractérisé en ce que la ou les couches (22 ; 28 ; 34) agencées entre les deux couches d'arrêt (18, 20) présente(nt) une capacité de déformation nettement plus importante que les couches d'arrêt (18, 20).

6. Corps creux selon la revendication 1, caractérisé en ce que les au moins deux couches d'arrêt (18, 20) sont agencées quelque peu au centre (16) du stratifié avec la au moins une couche (22) agencée entre celles-ci, réalisée à partir d'un autre matériau.

7. Corps creux selon la revendication 4, caractérisé en ce qu'au moins une couche (24, 26) du stratifié se compose d'un matériau formant agent adhésif, lequel est capable de lier ensemble deux couches (12, 18 ; 14, 20) qui se composent de matériaux différents et qui se distinguent du matériau de la couche d'agent adhésif et la couche (22) placée entre les couches d'arrêt (18, 20) se compose d'un matériau qui est également utilisé pour les couches d'agent adhésif (24, 26).

8. Corps creux selon la revendication 1, caractérisé en ce qu'au moins une des couches d'arrêt est agencée à proximité de la surface intérieure du corps creux.

9. Corps creux selon la revendication 1, caractérisé en ce qu'au moins une des couches d'arrêt (18, 20) se compose de polyamide.

10. Corps creux selon la revendication 1, caractérisé en ce qu'au moins une des couches d'arrêt (18, 20) se compose de EVOH (Ethylène-alcool vinylique).

11. Corps creux selon la revendication 1, caractérisé en ce qu'au moins une des couches d'arrêt (18, 20) se compose de PVDF (Fluorure de polyvinylidène).

12. Corps creux selon la revendication 1, caractérisé en ce qu'au moins une des autres couches (12, 14) se compose d'une polyoléfine, par exemple du polyéthylène.

13. Corps creux selon la revendication 1, caractérisé en ce qu'au moins une des autres couches se compose d'un matériau recyclé, qui contient tous les constituants de l'ensemble des couches.

14. Corps creux selon la revendication 1, caractérisé en ce que le stratifié se compose sur sa face intérieure d'une couche de limitation en matière plastique, qui a été traitée au fluor.
